Europäisches Patentamt

European Patent Office

Office européen des brevets

(11) Publication number: **0 383 938**
**A1**

## EUROPEAN PATENT APPLICATION
### published in accordance with Art. 158(3) EPC

Application number: 89909421.3

Date of filing: 16.08.89

International application number:
PCT/JP89/00835

International publication number:
WO 90/02368 (08.03.90 90/06)

(51) Int. Cl.5 **G05B 19/403**

Priority: 26.08.88 JP 211955/88

Date of publication of application:
29.08.90 Bulletin 90/35

Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **FUJITA, Naoki Fanuc Mansion**
**Harimomi 6-203**
**3537-1, Shibokusa Oshinomura,**
**Minamitsuru-gun Yamanashi 401-05(JP)**
Inventor: **MATSUMURA, Teruyuki**
**38-8, Matsugaya**
**Hachioji-shi Tokyo 192-03(JP)**
Inventor: **MURATA, Koichi**
**1-3-32-504, Nikkocho**
**Fuchu-shi Tokyo 183(JP)**

(74) Representative: **Brunner, Michael John et al**
**GILL JENNINGS & EVERY 53-64 Chancery**
**Lane**
**London WC2A 1HN(GB)**

(54) **SHAPE INPUT SYSTEM.**

(57) This invention relates to a shape input system for inputting a component shape by use of symbolic keys in an interactive numeric controller or in an automatic programming apparatus. The start and end points of an inputted shape constituent element (4) are designated, the shape constituent elements between these points are copied and the component shape is inputted. In this manner, the input operation of the same component shape is simplified.

Fig. 1 (a)

Fig. 1 (b)

Fig. 1 (c)

Fig. 1 (d)

Fig. 1 (e)

# D E S C R I P T I O N

## CONFIGURATION INPUT SYSTEM

### TECHNICAL FIELD

The present invention relates to a configuration input system for inputting a part configuration using symbol keys, and more specifically, to a configuration input system by which a part configuration can be simply input by copying the same part configuration.

### BACKGROUND ART

In interactive numerical control apparatuses, automatic programming apparatuses and the like, a configuration input system by which a part configuration is input by using symbol keys to input configuration constituting factors, is widely used.

This configuration input system is provided with symbol keys representing the configurations of a horizontal straight line, a vertical straight line, an oblique straight line, a partial circular arc, and the like, and a machining configuration is created by using these symbol keys to input a part configuration. The configuration input system enables a simple input of a part configuration by using these symbol keys, and thus can be readily understood by beginners.

On the other hand, a part having the same configuration often appears, and even if the configuration input system using the symbol keys is utilized, the same part configuration must be input each time by a repeated operation of the symbol keys: namely the same operation must be repeated.

DISCLOSURE OF THE INVENTION

Taking the above into consideration, an object of the present invention is to provide a configuration input system capable of simply inputting a same part configuration by copying the same part configuration.

To solve the above problem, in accordance with the present invention, there is provided a configuration input system, for inputting a part configuration using symbol keys, in an interactive numerical control apparatus or an automatic programming apparatus, the system comprising the steps of designating a start point and end point of configuration constituting factors which have been input, and copying the configuration constituting factors between the designated start point and end point to thereby input a part configuration.

Accordingly, the input operation is simplified by designating the start point and end point of the configuration constituting factors to be copied, and copying the factors therebetween.

BRIEF DESCRIPTION OF THE DRAWINGS

Figures 1(a), (b), (c), (d) and (e) are diagrams showing displays of a configuration input system of an embodiment according to the present invention;

Figure 2 is a flowchart of a copy routine of a configuration input system according to the present invention; and

Figure 3 is a schematic diagram of the hardware of an interactive numerical control apparatus as an embodiment of the present invention.

BEST MODE OF CARRYING OUT THE INVENTION

An embodiment of the present invention will be described below with reference to drawings.

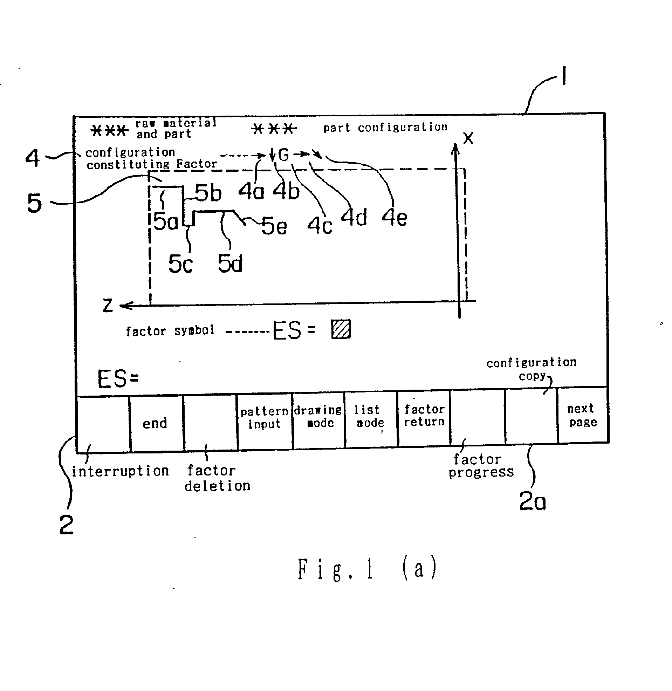

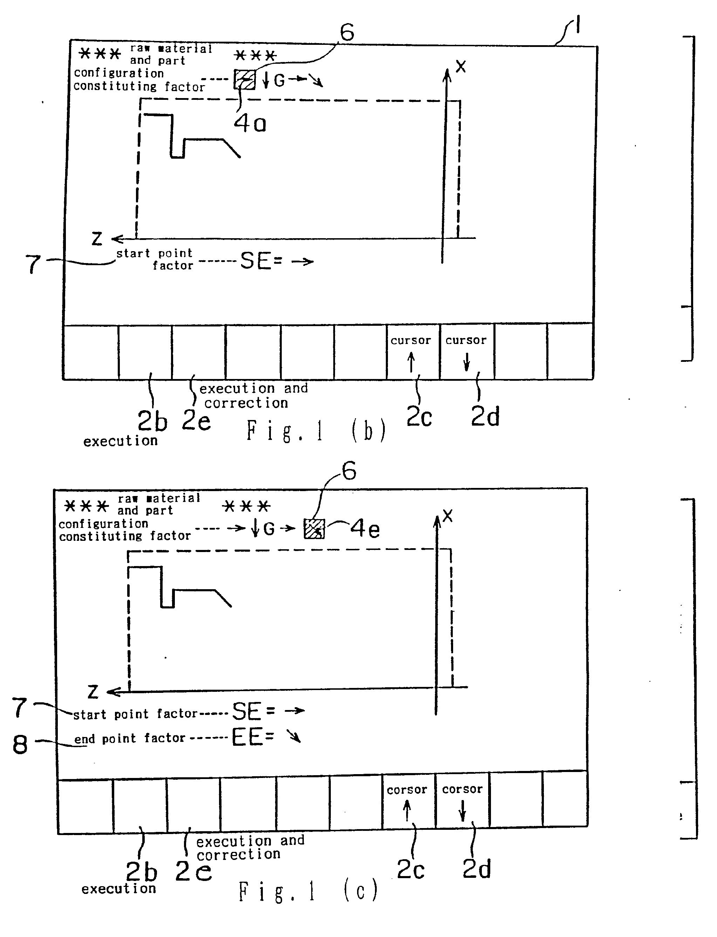

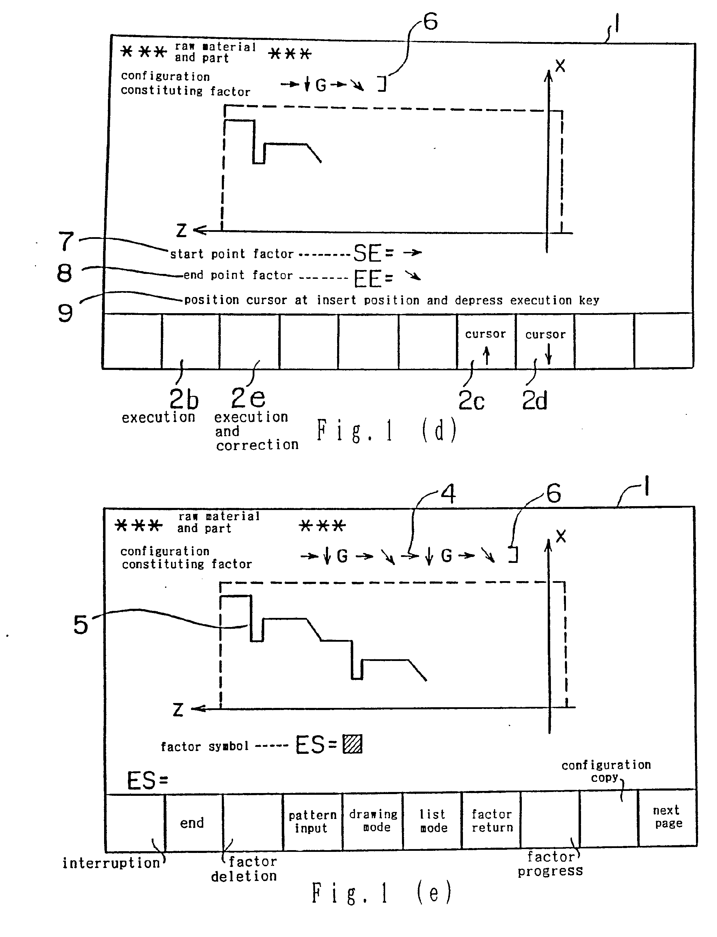

Figures 1(a), (b), (c), (d) and (e) show displays of a configuration input system of an embodiment according to the present invention.

Figure 1(a) is a diagram showing the state where the input of the configuration constituting factors is under the way, wherein 1 designates a display; 2 designates a software key by which various operations can be carried out, note, only a configuration copy key 2a directly related to the present invention will be described here, and a description of the other keys is omitted; and 4 designates input configuration constituting factors which include a horizontal straight line 4a, a vertical straight line 4b, a groove G4c, a horizontal straight line 4d, and an oblique straight line 4e. These configuration constituting factors are input through not shown symbol keys. A part configuration 5 is drawn by these configuration constituting factors, and the configuration constituting factor 4a corresponds to the straight line 5a, the configuration constituting factor 4b corresponds to the straight line 5b, and the like.

Next, the operation of copying the part configuration 5 will be described. When a configuration copy key 2a of Figure 1 is depressed, the software key shown in Figure 1(b) is shown at the display 1. When a cursor 6 is positioned at the location of the configuration constituting factor 4a and a not shown input key is depressed, a start point factor 7 is defined. The cursor 6 is moved by cursor keys 2c and 2d. Although the cursor keys 2c and 2d are shown with vertical arrows, the cursor is actually moved horizontally.

Next, as shown in Figure 1(c), when the cursor 6 is positioned at the location of the configuration constituting factor 4e and the input key is depressed, an end point factor 8 is defined, and then a message 9 indicating "position cursor at insert position and depress execution key" is displayed, as shown in Figure 1(d), so that the cursor 6 is positioned at an insert position and an execution key 2b is depressed. Here, the indication shows that the copy is executed next to the factor currently defined.

When the execution key 2b is depressed, the configuration constituting factors 4 are copied at the display 1, the part configuration corresponding thereto is similarly copied, and the previously input part configuration is then drawn, whereby a target part configuration 5 is obtained as shown in Figure 1(e). Namely, the same part configuration can be copied by the method as described above.

Further, when an execution and correction key 2e is depressed, the configuration constituting factors 4 are copied at the display 1, and at the same time, the part configuration corresponding thereto is copied and the previously input part configuration is drawn. The cursor 6 is positioned at the first factor of the configuration constituting factors 4, and therefore, when the "input key" or a "next page" key is depressed, the display shows the end point data of the factors, and thus the data can be corrected if necessary.

When the data of an other factor is to be corrected, a "factor progress" key or a "factor return" key is depressed to select a factor to be corrected, and then the "input" key or the "next page" key is depressed to display and correct the data.

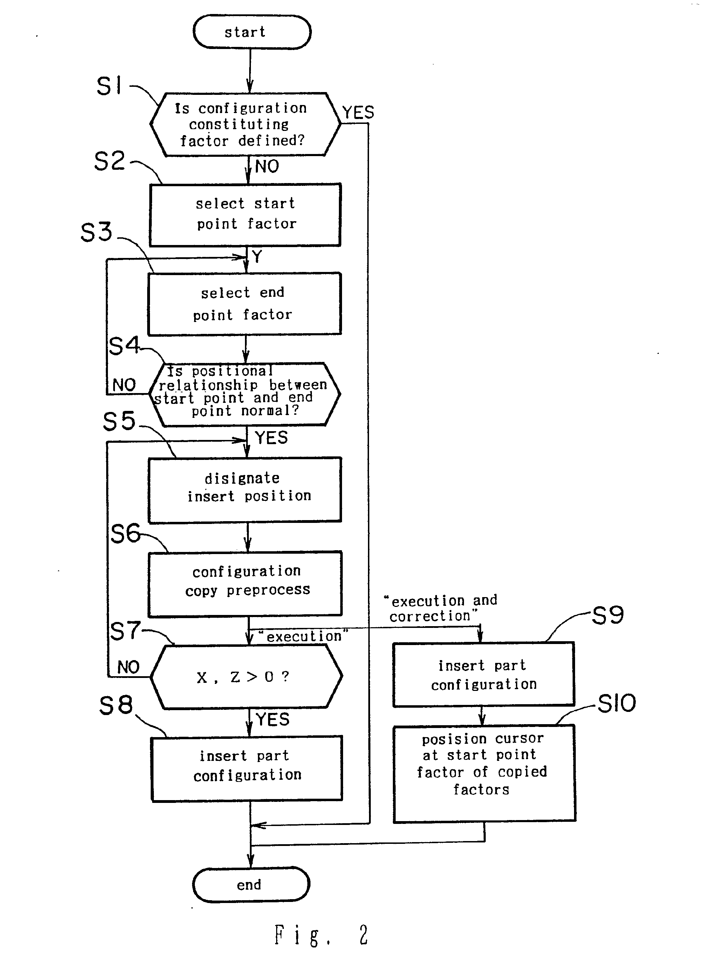

Next, the process of a routine copying for these part configurations will be described. Figure 2 shows a flowchart of the configuration input system copy routine according to the present invention, wherein numerals prefixed with an "S" indicate the numbers of the steps of the process.

First, it is determined whether a configuration constituting factor is defined at S1. If not defined, the flow is ended, since a copy operation cannot be carried out, and if defined, the flow goes to step S2, where a start point factor is selected and input, and then at step S3, an end point factor is selected and input. Then, it is determined whether a positional relationship between the start point and the end point is normal, at step S4. In principle, the start point must be positioned to the left the end point in Figure 1(a). This relationship may differ, depending on a coordinate to be selected or a figure. When the relationship is normal, the flow goes to step S5. If the relationship is not normal, it is displayed at the display and the start point or end point are again input. Then an insert position is designated at S5, and a configuration copy preprocess is carried out to copy a configuration at step S6. When the "execution" key is then depressed, the flow goes to step S7, and when the "execution and correction" key is depressed, the flow goes to step S9. At step S7, it is determined whether the coordinate value of the end point after the copy has been carried out is within the size of a raw material, i.e., whether or not the coordinate value is 0 or less. When the coordinate value is 0 or less, an error may occur, and thus the flow returns to step S5 to correct the insert position.

When the coordinate value is greater than 0, the flow goes to step S8, where a part configuration is inserted and configuration constituting factors and a new part configuration are drawn, or to step S9 at which the part configuration is inserted and the configuration constituting factors and the new part configuration are drawn. The cursor is then positioned at the start point factor of the copied configuration factors at step 10.

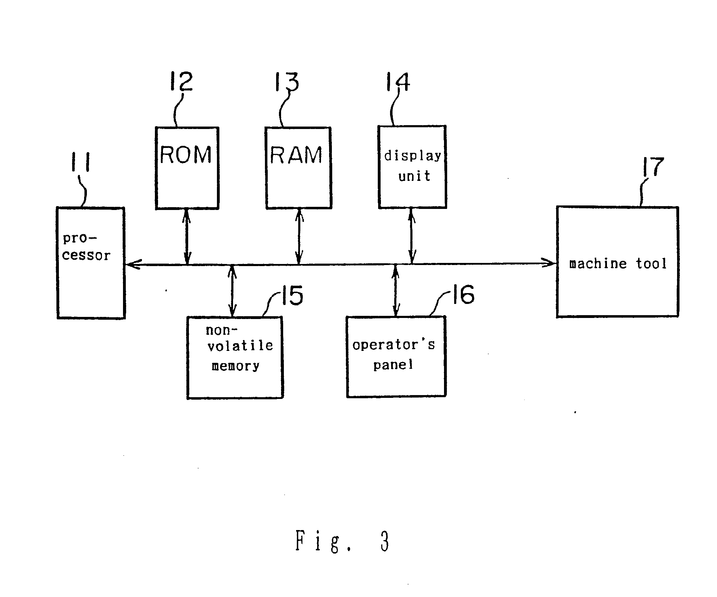

Figure 3 shows a schematic diagram of the hardware of an interactive numerical control apparatus as an embodiment according to the present invention, wherein 11 designates a processor for controlling the interactive numerical control apparatus as a whole; 12 designates a ROM in which a system program is stored; 13 designates a RAM in which various data is stored; 14 designates a display unit, for which a CRT or the like can be used; 15 designates a non-volatile memory in which machining programs, parameters and pitch error correction amounts are stored; 16 designates an operator's panel; and 17 designates a machine tool.

As described above, according to the present invention, since the same part configuration is copied, the operation of inputting a part configuration is simplified and a time needed to input the configuration is shortened.

CLAIMS

1. A configuration input system for inputting a part configuration using symbol keys in an interactive numerical control apparatus or an automatic programming apparatus, comprising the steps of:

designating a start point and an end point of configuration constituting factors which have been input; and

copying said configuration constituting factors between said start point and said end point to thereby input a part configuration.

2. A configuration input system according to claim 1, wherein data is simultaneously corrected when said configuration constituting factors are copied.

**\*\*\*** raw material and part      **\*\*\***      part configuration

X

4 —— configuration constituting Factor    - - - - → ↓G →↘

5

5b    4a 4b

5a

5c    5d    5e    4c    4d    4e

Z ←

factor symbol - - - - - - ES = ▨

configuration copy

ES=

| interruption | end | factor deletion | pattern input | drawing mode | list mode | factor return | | factor progress | next page |
|---|---|---|---|---|---|---|---|---|---|

2

2a

F i g. 1 (a)

6

/

*** raw material *** 6
and part
configuration ---- ↓G→↘
constituting factor
4a

X

Z ←
start point
7 factor ----- SE= →

| | | | | | | cursor ↑ | cursor ↓ | | |
|---|---|---|---|---|---|---|---|---|---|

execution and
correction

2b 2e Fig. 1 (b) 2c 2d

execution

6

*** raw material ***
and part
configuration --- →↓G→ ⊠ 4e
constituting factor

X

Z ←
7 start point factor ----- SE= →
8 end point factor ------ EE= ↘

| | | | | | | corsor ↑ | corsor ↓ | | |
|---|---|---|---|---|---|---|---|---|---|

execution and
correction

2b 2e 2c 2d

execution Fig. 1 (c)

EP 0 383 938 A1

**Fig. 1 (d)**

*** raw material and part ***

configuration constituting factor

→↓G→↘ ⌐

X

Z ←

7 — start point factor ------- SE = →
8 — end point factor ------- EE = ↘
9 — position cursor at insert position and depress execution key

| | | | | | | | cursor ↑ | cursor ↓ | | |

2b execution   2e execution and correction   2c   2d

**Fig. 1 (e)**

*** raw material and part ***

configuration constituting factor

→↓G→↘ →↓G→↘ ⌐

X

5

Z ←

factor symbol ----- ES = ▨

ES=

configuration copy

| | end | | pattern input | drawing mode | list mode | factor return | | | next page |

interruption   factor deletion   factor progress

```
                    ┌──────────────┐
                    │    start     │
                    └──────┬───────┘
                           │
                           ▼
    S1 ──────  ╱───────────────────╲   YES
              ╱  Is configuration    ╲ ─────────────┐
              ╲  constituting        ╱              │
               ╲ factor defined?    ╱               │
                ╲──────────────────╱                │
                       │ NO                          │
                       ▼                             │
    S2 ──────  ┌──────────────┐                      │
              │  select start │                      │
              │  point factor │                      │
              └──────┬────────┘                      │
                     │                               │
    S3 ──────────────►Y                              │
              ┌──────────────┐                       │
              │  select end  │                       │
              │  point factor│                       │
              └──────┬───────┘                       │
                     │                               │
    S4 ──────  ╱────────────────────╲               │
       NO     ╱  Is positional       ╲              │
         ─────╲ relationship between  ╱             │
              ╲ start point and end  ╱              │
               ╲ point normal?      ╱               │
                ╲──────────────────╱                │
                       │ YES                         │
    S5 ────────────────►                             │
              ┌──────────────┐                       │
              │  disignate   │                       │
              │insert position│                      │
              └──────┬───────┘                       │
                     │                               │
    S6 ──────  ┌──────────────┐   "execution and    │
              │ configuration │    correction"       │
              │ copy preprocess│  ──────────  S9     │
              └──────┬───────┘        │              │
                     │ "execution"    ▼              │
    S7 ──────  ╱──────────╲    ┌──────────────┐      │
       NO     ╱            ╲   │  insert part │      │
         ─────╲  X , Z > 0 ? ╱ │ configuration│      │
              ╲            ╱   └──────┬───────┘      │
               ╲──────────╱          │              │
                    │ YES        S10 ┌──────────────┐│
    S8 ──────  ┌──────────────┐      │posision cursor││
              │  insert part │       │ at start point││
              │ configuration│       │factor of copied│
              └──────┬───────┘       │  factors     ││
                     │               └──────┬───────┘│
                     ▼◄─────────────────────┴────────┘
                    ┌──────────────┐
                    │     end      │
                    └──────────────┘
```

Fig. 2

Fig. 3

# INTERNATIONAL SEARCH REPORT

International Application No PCT/JP89/00835

**I. CLASSIFICATION OF SUBJECT MATTER** (if several classification symbols apply, indicate all) [6]

According to International Patent Classification (IPC) or to both National Classification and IPC

Int. Cl$^4$      G05B19/403

**II. FIELDS SEARCHED**

Minimum Documentation Searched [7]

| Classification System | Classification Symbols |
|---|---|
| IPC | G05B19/403, 19/405 |

Documentation Searched other than Minimum Documentation
to the Extent that such Documents are Included in the Fields Searched [8]

| | |
|---|---|
| Jitsuyo Shinan Koho | 1971 - 1989 |
| Kokai Jitsuyo Shinan Koho | 1971 - 1989 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 57-19809 (Fujitsu Fanuc, Ltd.) 2 February 1982 (02. 02. 82) Page 6, lower right column, line 3 to page 10, upper left column, line 11 & EP, A, 44192 & US, A, 4490781 & KR, B, 8500362 | 1 - 2 |
| A | JP, A, 63-181074 (Fanuc Ltd.) 26 July 1988 (26. 07. 88) Page 4, upper left column, line 14 to page 5, lower left column, line 16 (Family : none) | 1 - 2 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 20, 1989 (20. 09. 89) | October 2, 1989 (02. 10. 89) |

| International Searching Authority | Signature of Authorized Officer |
|---|---|
| Japanese Patent Office | |

Form PCT ISA 210 (second sheet) (January 1985)